**Europäisches Patentamt**

**European Patent Office**

**Office européen des brevets**

(19)

(11) Veröffentlichungsnummer: **0 049 701**

**A2**

# (12) EUROPÄISCHE PATENTANMELDUNG

(21) Anmeldenummer: **81890164.7**

(22) Anmeldetag: **08.10.81**

(51) Int. Cl.³: **F 02 D 5/02**

(30) Priorität: **08.10.80 AT 4999/80**

(43) Veröffentlichungstag der Anmeldung:
**14.04.82 Patentblatt 82/15**

(84) Benannte Vertragsstaaten:
**AT DE FR GB**

(71) Anmelder: **Friedmann & Maier Aktiengesellschaft
Friedmannstrasse 7
A-5400 Hallein bei Salzburg(AT)**

(72) Erfinder: **Lehner, Gerhard, Dipl.Ing.Dr.
Pabensteinstrasse 9
A-5400 Hallein(AT)**

(72) Erfinder: **Stipek, Theodor, Dipl.Ing.
Gamperstrasse 15
A-5400 Hallein(AT)**

(72) Erfinder: **Herzog, Peter, Dipl.Ing.Dr.
Sikorastrasse 10
A-5400 Hallein(AT)**

(74) Vertreter: **Kretschmer, Adolf, Dipl-Ing.
Patentanwälte Dipl.Ing. A. Kretschmer Dr. Thomas M.
Haffner Schottengasse 3a
A-1014 Wien(AT)**

(54) **Verfahren zur Steuerung des Förderbeginns einer Einspritzpumpe sowie Vorrichtung zur Durchführung dieses Verfahrens.**

(57) Bei einem Verfahren zur Steuerung des Förderbeginns einer Einspritzpumpe für Einspritzbrennkraftmaschinen in Abhängigkeit vom Drehmoment unter Berücksichtigung unmittelbar meßbarer Betriebsgrößen, zumindest der Drehzahl, wird das Drehmoment aus der Abstützkraft des Motors an einem festen Hebelarm gegenüber dem Fahrzeugrahmen oder dem Motorfundament ermittelt.

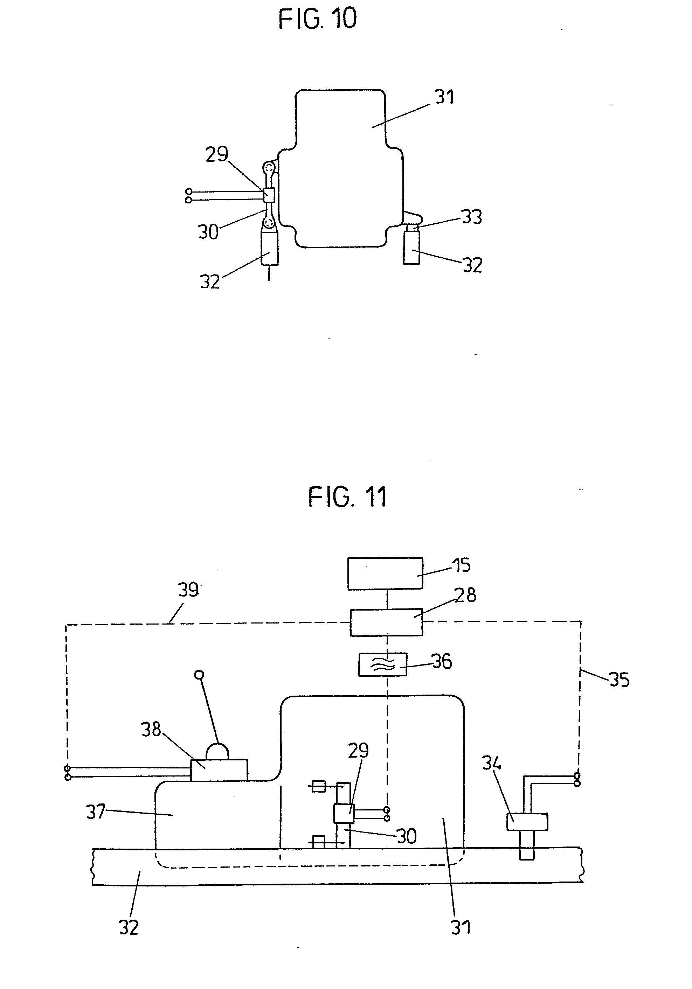

Eine Vorrichtung zur Durchführung dieses Verfahrens enthält einen Speicher zur Speicherung des auszuführenden Programms aufweisenden Prozessor zum Ausführen von mindestens einer Rechenoperation, dem von Meßwertaufnehmern (29) jeweils ein Maß für Betriebsgrößen der Einspritzbrennkraftmaschine (31) darstellende Signale zugeführt werden und der eine Betätigungseinrichtung (15) zur Steuerung des Beginns der Kraftstofförderung der Einspritzpumpe steuert. Hiebei ist der Meßwertaufnehmer (29) für die Ermittlung des jeweils vom Motor (31) abgegebenen Drehmoments als Kraftmesser für die Abstützkraft des Motors gegenüber dem Fahrzeugabnehmer (32) oder dem Motorfundament ausgebildet. Im Falle eines am Motorgehäuse angeflanschten Wechselgetriebes (37) ist auch ein die eingeschaltete Getriebestufe erfassender Meßwertgeber (38) mit dem Prozessor verbunden (Fig. 11).

FIG. 11

Verfahren zur Steuerung des Förderbeginns einer Einspritzpumpe sowie Vorrichtung zur Durchführung dieses Verfahrens.

Die Erfindung bezieht sich auf ein Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrößen wie Drehzahl, Ladedruck, Motortemperatur od.dgl., gemessen werden und das jeweils vom Motor abgegebene Drehmoment ermittelt wird, worauf in Abhängigkeit von dem ermittelten Drehmoment unter Berücksichtigung zumindest der gemessenen Drehzahl der Förderbeginn der Kraftstoffeinspritzpumpe verstellt wird, sowie auf eine zur Durchführung dieses Verfahrens geeignete Vorrichtung.

Es ist bekannt, daß die Schadstoffemission von Verbrennungsmotoren durch geeignete Wahl des Zündzeitpunktes bei Ottomotoren bzw. des Einspritzbeginns bei Einspritzbrennkraftmaschinen, insbesondere bei Dieselmotoren, wesentlich verringert werden kann. Dabei ist als Parameter für die relative Verlagerung dieses maßgeblichen Punktes neben der Motordrehzahl auch die Last von Wichtigkeit, die bei Ottomotoren durch die Einleitung des Unterdruckes im Saugrohr auf eine federbelastete Membrane zur Zündzeitpunktverstellung eingesetzt wird.

Aus der DE-OS 29 03 875 ist bereits eine Einrichtung zur Durchführung des eingangs genannten Verfahrens bekannt geworden, bei welcher neben einem der Drehzahl proportionalen elektrischen Signal die Stellung der Regelstange der Einspritzpumpe zur Ermittlung der Belastung des Motors herangezogen wird, wobei an der Regelstange ein Positionsgeber angeordnet ist. Die Stellung der Regelstange ist aber insbesondere im Schubbetrieb ein ungenügendes Kriterium für das tatsächliche Ausmaß der Belastung des Motors und die Verwendung von Positionsgebern an der Regelstange erfordert eine zusätzliche Kompensation der thermischen Ausdehnung der Regelstange im Betrieb. Insbesondere bei Kraftfahrzeugmotoren, bei welchen häufig ein Schubbetrieb auftritt, kann daher mit der bekannten Einrichtung die Schadstoffemission nicht in der erforderlichen Weise optimiert werden.

Die Erfindung zielt nun darauf ab, ein Verfahren der eingangs genannten Art zu schaffen, mit welchem die Schadstoffemission und der Verbrauch einer Einspritzbrennkraftmaschine, insbesondere eines Dieselmotors, bei allen Betriebszuständen und insbesondere auch im Schubbetrieb verringert werden kann. Zur Lösung dieser Aufgabe besteht die Erfindung im wesentlichen darin, daß das Drehmoment aus der Abstützkraft des Motors an einem festen Hebelarm gegenüber dem Fahrzeugrahmen oder dem Motorfundament ermittelt wird. Dadurch, daß das Drehmoment des Motors aus der Abstützkraft des Motors ermittelt wird, wird eine unmittelbare Steuergröße für den tatsächlichen Belastungszustand auch im Schubbetrieb ermittelt und es kann daher die Schadstoffemission an Hand eines entsprechenden Programms mit einem Prozessor in allen Betriebszuständen verringert werden. Durch die Messung des Signals für das Motordrehmoment und die Verarbeitung dieser Meßgröße in einem Mikroprozessor läßt sich eine Stellgröße für die Verstellung des Einspritzzeitpunktes errechnen, wobei die lastabhängige Verstellung des Spritzbeginns beim Dieselmotor neben der Verringerung der Schadstoffemission auch eine Verbesserung der Leistungs- und Verbrauchswerte und eine Verminderung der thermischen und mechanischen Beanspruchung der Motorbauteile mit sich bringt.

Der Einspritzzeitpunkt muß in bekannter Weise in Abhängigkeit von der Motordrehzahl verstellt werden und die Verwendung eines Mikroprozessors ermöglicht es, in besonders einfacher Weise die Einflüsse von Motordrehzahl und Lastmoment gleichzeitig in eine gemeinsame Stellgröße für die Verstellung des Einspritzzeitpunktes umzusetzen. Die Verstellung des Einspritzzeitpunktes kann je nach Konstruktion der Einspritzpumpe in verschiedener Weise erfolgen; beispielsweise kann bei einer Ausbildung, bei welcher die Einspritzpumpe über einen Kipphebel von einer Nockenwelle angetrieben wird, der Lagerpunkt durch Betätigung eines Exzenters verschoben werden, wodurch sich ein früherer oder späterer Einspritzzeitpunkt ergibt. Die Verstellung dieses Exzenters kann beispielsweise hydraulisch oder elektrisch, beispielsweise mittels eines Schrittmotors, erfolgen. Eine Einrichtung zur Feststellung des Förderbeginns einer Einspritzpumpe ist beispielsweise aus der AT-PS 298 881 bekannt geworden. Bei dieser Ausbildung wird eine Kupplungsmuffe axial verschoben, wodurch die beiden durch die Muffe verbundenen Wellen, welche Außenverzahnungen mit verschiedenen Steigungen aufweisen, gegeneinander verdreht werden. Die Verschiebung der Kupplungsmuffe dieser bekannten Einrichtung kann beispielsweise hydraulisch, elektrisch und insbesondere mittels eines Schrittmotors erfolgen. Bei Einspritzpumpen, welche eine gesonderte Regelstange für die Verstellung des Einspritzzeitpunktes aufweisen, kann beispielsweise ein Schrittmotor unmittelbar kraftschlüssig mit dieser Regelstange gekoppelt werden. Ein Schrittmotor könnte ohne Zwischenschaltung von weiteren Bauteilen vom Mikroprozessor angesteuert werden. Für eine hydraulische Betätigung des Spritzverstellers müßte eine entsprechende mechanisch-hydraulische Umsetzung des Stellsignales erfolgen. Erfindungsgemäß kommen eine Reihe von Signalen für eine Auswertung in einem Mikroprozessor in Betracht, welche entweder direkt proportional der Last sind oder aber in einer einfachen Gestzmäßigkeit zur Last stehen. Erfindungsgemäß wird bei einem Motor ohne angeflanschtes Schaltgetriebe das Lastmoment aus der Abstützkraft an einem festen Hebelarm gegenüber dem Fahrzeugrahmen oder dem Motorfundament ermittelt. Hiebei kann der Mikroprozessor ohne weiteres zwischen Meßfehlern auf Grund von Vibrationen des Motors und des Getriebes sowie Spitzenwerten, welche auf Schwingungen und Beschleunigungskräfte zurückgehen, und dem

- 4 -

Nutzsignal unterscheiden, indem beispielsweise eine Glättung der Signale rechnerisch durchgeführt wird.

Vorzugsweise wird erfindungsgemäß ein weiterer Meßwert für die auf den Fahrzeugrahmen wirksamen Beschleunigungs- oder Verzögerungskräfte ermittelt, wobei der Meßwert für die Abstützkräfte des Motors unter Berücksichtigung der auf den Fahrzeugrahmen wirksamen Kräfte korrigiert wird. Auf diese Weise werden die bei einem bewegten Fahrzeug auftretenden Verzerrungen des Meßwertes der Abstützkraft des Motors für die Ermittlung des Drehmoments kompensiert und es können diese auf den Fahrzeugrahmen wirksamen Kräfte in einfacher Weise von den Meßwerten für die Abstützkraft des Motors subtrahiert werden.

Entsprechend den jeweiligen Meßverfahren kann der Meßwertaufnehmer besonders einfach an die zu erfassenden Meßgrößen angepaßt werden. So kann beispielsweise bei Dieselmotoren, bei welchen Motor und Getriebe zu einem gemeinsamen Block zusammengefaßt sind, das auf den Fahrzeugrahmen ausgeübte Reaktionsdrehmoment an einer als Zug- oder Druckstab ausgebildeten Drehmomentstütze gemessen werden, wobei in diesem Falle ein die Getriebeübersetzung des automatischen oder handgeschalteten Getriebes kennzeichnendes Signal ebenfalls an den Prozessor weitergegeben wird und aus den beiden Signalen das wirksame Motordrehmoment errechnet und an die Ausgabeeinheit und weiter an die Betätigungseinrichtung übertragen wird. Je nach Übersetzung des eingelegten Getriebeganges wird das Motordrehmoment entsprechend verändert. Beispielsweise beträgt das Abstützmoment bei einer Getriebeuntersetzung im ersten Gang von $i = 4$ und einem Motordrehmoment von 120 N m dann 480 N m. Es kann wiederum z.B. elektrisch gemessen werden und der Meßwert an einen Mikroprozessor weitergeleitet werden, der auch das Signal des gewählten Getriebeganges erhält und daraus das Motormoment

- 5 -

errechnet.

Zur weiteren Verringerung von Störeinflüssen werden vorzugsweise höherfrequente Schwingungen, wie sie im Fahrbetrieb
beispielsweise beim Überfahren von Fahrbahnunebenheiten entstehen können, durch eine elektrische Schaltungsanordnung
herausgefiltert.

Die erfindungsgemäße Vorrichtung zur Durchführung dieses
Verfahrens weist Meßwertaufnehmer für Betriebsgrößen wie Drehzahl, Ladedruck, Motortemperatur od.dgl., sowie wenigstens einen weiteren Meßwertaufnehmer zur Ermittlung des jeweils
vom Motor abgegebenen Drehmomentes auf, welche Meßwertaufnehmer mit einem Prozessor zum Ausführen von mindestens einer Rechenoperation verbunden sind, welcher Prozessor einen
Speicher zur Speicherung des auszuführenden Programms aufweist, und mit einer mit dem Prozessor verbundenen Betätigungseinrichtung zur Steuerung des Beginns der Kraftstoffförderung der Einspritzpumpe. Die genannte Vorrichtung ist
erfindungsgemäß im wesentlichen dadurch gekennzeichnet, daß
der Meßwertaufnehmer für die dem Motordrehmoment entsprechende
Betriebsgrößen als Kraftmesser für die Abstützkraft des
Motors gegenüber dem Fahrzeugrahmen oder dem Motorfundament
ausgebildet ist. Die Ausbildung kann hiefür in einfacher Weise so getroffen sein, daß der Meßwertaufnehmer zur Ermittlung
des jeweils vom Motor abgegebenen Drehmoments an oder in einer Drehmomentstütze angeordnet ist, wobei der Kraftmesser
von einem piezoelektrischen Druckgeber oder einem Dehnungsmeßstreifen gebildet sein kann. Zur Kompensation der im
Fahrbetrieb auftretenden Störungen ist vorzugsweise ein Beschleunigungsmesser, insbesondere ein Drehbeschleunigungsmesser, mit dem Fahrzeugrahmen und elektrisch mit dem Prozessor verbunden, wobei das Steuergerät eine elektrische Filterschaltung, vorzugsweise einen Tiefpass, zumindest für die

- 6 -

Signale des Kraftmessers für die Abstützkraft des Motors enthält. Da auch die Signale des Beschleunigungsmessers bzw. des Drehbeschleunigungsmessers durch Vibrationen bzw. kurze Schläge auf den Fahrzeugrahmen beeinflußt werden können, können auch diese Signale über einen Tiefpass an die Steuerschaltung weitergeleitet werden. Zur Berücksichtigung der erforderlichen Korrektur des Meßwertes bei einem an den Motor angeflanschten Getriebe ist erfindungsgemäß ein die eingeschaltete Getriebestufe erfassender Meßwertgeber mit dem Prozessor verbunden.

Das den Mikroprozessor enthaltende Steuergerät kann mit einem Stellglied für die Einstellung des Beginns der Kraftstofförderung verbunden sein, welches von einem hydraulischen oder pneumatischen Arbeitskolben, einem elektrischen Hubmagneten, einem Elektromotor, einem elektrischen Stellmotor oder einem elektrischen Schrittmotor gebildet ist. Da dem Steuergerät nicht nur ein lastabhängiges Signal, sondern in der Regel auch ein der Drehzahl entsprechendes Signal zugeführt wird, lassen sich komplizierte Zusammenhänge mit einem gemeinsamen Stellglied dieser Art bewerkstelligen. Hiebei kann vorzugsweise so vorgegangen werden, daß auf Grund der in das Steuergerät eingesteuerten Drehzahl- und Lastsignale ein im Steuergerät gespeicherter Spritzverstellungskennwert abgerufen und dem Stellglied zugeordnet wird.

Die Erfindung wird nachfolgend an Hand der Zeichnung näher erläutert, in welcher eine Einrichtung zur last- und drehzahlabhängigen Spritzverstellung gezeigt ist, bei welcher die Spritzverstellung durch Differenzdrehbewegung zwischen Pumpenantrieb und Pumpennockenwelle erzeugt wird.

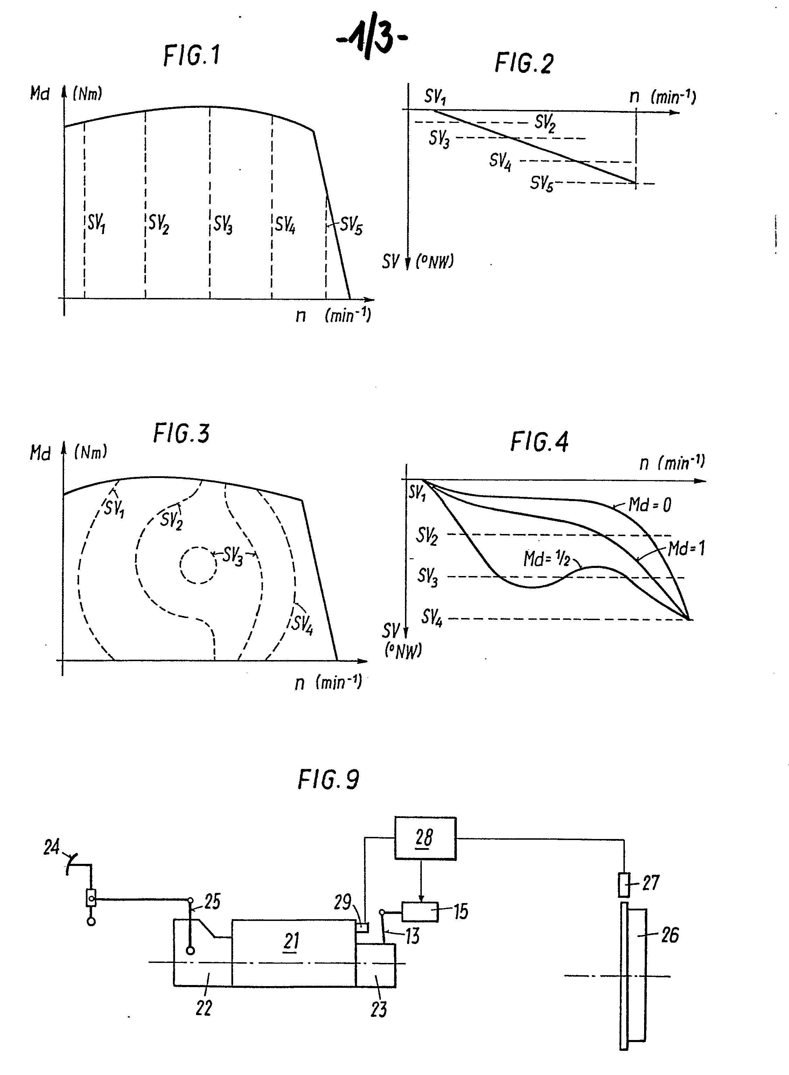

Fig. 1 und 2 zeigen den linearen Spritzverstellungsdrehzahlzusammenhang unabhängig vom Drehmoment des Motors, wie sie bei konventionellen Regelungen vorgenommen wird. Die Spritz-

- 7 -

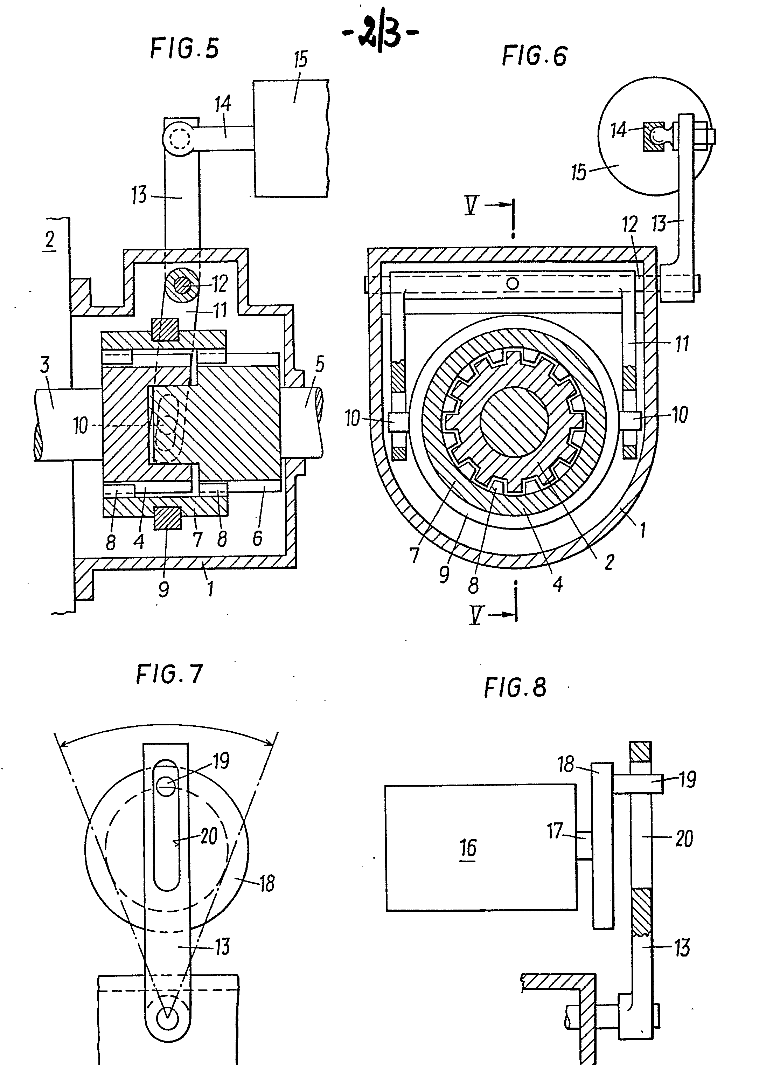

verstellungskurven im Motorkennfeld sind daher gerade über der Drehzahl. In Fig. 3 und 4 sind drehzahl- und lastabhängige Spritzverstellungen dargestellt, wie sie erfindungsgemäß erzielbar sind. Fig. 5 und 6 zeigen eine Einrichtung zur Verstellung des Drehwinkels zwischen Pumpenantrieb und Pumpennockenwelle im Schnitt, wobei Fig. 5 einen Schnitt nach der Linie V-V der Fig. 6 darstellt. Fig. 7 und 8 zeigen eine Ausbildung des Stellgliedes als Schrittmotor, Fig. 9 einen schematischen Gesamtaufbau für ein Einspritzsystem, Fig. 10 eine schematische Darstellung der Anordnung eines Meßwertaufnehmers für die Abstützkraft des Motors und Fig. 11 eine Anordnung der Meßwertaufnehmer für einen Fahrzeugmotor.

In Fig. 1 ist auf der Abszisse die Motordrehzahl in $Min^{-1}$ und auf der Ordinate das Motordrehmoment in Nm aufgetragen. Wie aus Fig. 2 hervorgeht, ergibt die Spritzverstellung bei verschiedenen Motordrehzahlen aufgetragen auf der negativen Ordinatenachse als Nockenwellenwinkel im Grad vor dem oberen Totpunkt des Kolbens der Brennkraftmaschine eine Gerade, welche bei der konventionellen Regelung unabhängig vom Motordrehmoment ist. Abweichend von derartigen konventionellen Verstellcharakteristiken sind in den Fig. 3 und 4 den Fig. 1 und 2 analoge Darstellungen für verschiedene Motordrehmomente wiedergegeben, wobei beliebige drehzahl- und lastabhängige Spritzverstellungen möglich sein sollen.

Die Möglichkeit für die Erzielung der in Fig. 3 und 4 wiedergegebenen Charakteristiken wird beispielsweise durch eine Ausbildung der Verstelleinrichtung für den Einspritzzeitpunkt nach den Fig. 5 und 6 gegeben, wobei das Stellglied von einer Steuereinrichtung angesteuert wird. In Fig. 5 und 6 ist mit 1 ein Gehäuse bezeichnet, das z.B. an dem Einspritzpumpengehäuse 2 angeflanscht ist. Im Gehäuse 1 befindet sich die Welle 3, die eine Außenverzahnung 4 besitzt. In der Welle 3 und im Gehäuse 1 ist eine zweite Welle 5 gelagert, die ebenfalls eine Außenverzahnung 6 trägt. Die Schiebemuffe 7, die eine Innenverzahnung 8 besitzt, ist über einen Gleitring 9 längs verschieblich. Durch die Kombination von Schrägverzahnungen bzw. Geradverzahnungen und Schrägverzahnungen wird durch die Längsverschiebung der Schiebemuffe 7 eine Relativbewegung der Wellen 3 und 5 zueinander erreicht. Auf dem Gleitring 9 sind Bolzen 10 angebracht, die über ein Gestänge 11, von einer Welle 12 und einem Außenhebel 13 betätigt werden. Je nach Lage des Außenhebels 13 ergibt sich nun eine ganz definierte Stellung der Schiebemuffe 7 und damit eine entsprechende Drehdifferenz zwischen den Wellen 3 und 5. Da die Drehdifferenz zwischen den Wellen 3 und 5 der Spritzverstellung proportional ist, kann damit über den Aussenhebel 13 jede beliebige Spritzverstellung erreicht werden. Der Außenhebel 13 ist über eine Stange 14 mit einem Stellmotor 15 verbunden. Dieser steuert in Funktion der Motorlast und des Motordrehmoments die Lage der Schiebemuffe 7 und damit die Spritzverstellung. Der Stellmotor 15 kann sowohl nach dem hydraulischen, pneumatischen oder elektrischen Prinzip arbeiten. Voraussetzung ist, daß der Stellmotor 15 allen vorkommenden Last- und Drehzahländerungen des Verbrennungsmotors folgen kann.

Fig. 7 und 8 zeigen ein Ausführungsbeispiel mit einem Schrittmotor 16. Der Schrittmotor zeichnet sich durch eine hohe Schrittfrequenz und eine hohe Genauigkeit aus. Auf der Welle 17 sitzt eine Scheibe 18, in der sich ein Bolzen 19 befindet. Dieser Bolzen 19 greift in eine Nut 20 des Außenhebels 13 ein. Je nach Drehlage des Schrittmotors wird nun der Außenhebel 13 betätigt und damit die erforderliche Spritzverstellung erreicht.

In Fig. 9 ist der schematische Gesamtaufbau für ein konventionelles Einspritzsystem dargestellt. Die Erfindung ist jedoch nicht notwendigerweise mit einem derartigen Einspritzsystem gekoppelt, sondern ist für jedes beliebige Einspritzsystem gedacht. An der Pumpe 21 befindet sich ein Regler 22 und der angebaute Spritzversteller 23. Über den Fahrfußhebel 24 wird nun der Außenhebel 25 des Reglers betätigt und damit die erforderliche Motordrehzahl bzw. Motorlast vorgewählt. An dem Schwungrad 26 des Verbrennungsmotors befindet sich ein Aufnehmer 27, der die Drehzahl mißt. Diese Drehzahl wird in das Steuergerät 28 übertragen. Gleichzeitig wird über einen Aufnehmer das Motormoment festgestellt. In Fig. 9 ist dieser Aufnehmer mit 29 schematisch angedeutet. Das Signal des Meßwertaufnehmers 29, welches dem Lastmoment proportional ist, wird an das Steuergerät 28 weitergeleitet. In dem Steuergerät 28 sind die Soll-Spritzverstellungskennwerte gespeichert. Aus der Messung von Motordrehmoment und Motordrehzahl ist der Lastpunkt im Motorkennfeld genau definiert, und damit auch die erforderliche Spritzverstellung. Das Steuergerät 28 steuert nun entsprechend dem Motorlastpunkt den Stellmotor 15 an, der über den Außenhebel 13 die gewünschte Spritzverstellung einstellt.

Der Aufnehmer 29 ist, wie in Fig. 10 dargestellt, an einer Drehmomentstütze 30 festgelegt, über welche der Motor 31 mit dem Fahrzeugrahmen 32 verbunden ist. Die Abstützung des Motors erfolgt hiebei auf der einen Seite des Fahrzeugrahmens 32 in üblicher Weise, beispielsweise unter Zwischenschaltung von elastischen Puffern 33, wobei ein Maß für die Belastung des Motors in der Drehmomentstütze 30 ermittelt werden kann. Der Meßwertaufnehmer 29 kann hiebei beispielsweise von einem piezoelektrischen Druckgeber oder einem Dehnungsmeßstreifen gebildet sein, und ist mit dem Mikroprozessor elektrisch ver- bunden.

In Fig. 11 ist zusätzlich zu dem Meßwertaufnehmer 29 ein Dreh- Beschleunigungsgeber 34 mit dem Rahmen 32 des Fahrzeuges verbunden. Dieser Drehbeschleunigungsgeber 34 erlaubt die Messung von Beschleunigungs- und Verzögerungskräften, wie sie beim Bremsen oder in Kurvenfahrten auftreten. Die Signale dieses Drehbeschleunigungsgebers 34 sind über eine Steuerleitung 35 mit der Steuereinheit 28 verbunden. Die Signale des Meßwertaufnehmers 29 an der Drehmomentstütze 30 werden über einen Tiefpass 36 an das Steuergerät 28 weitergeleitet. Der Motor 31 in Fig. 11 weist ein an dem Motor angeflanschtes Getriebe 37 auf und es ist ein weiterer Meßwertgeber 38 vorgesehen, welcher den Schaltzustand des Getriebes 37 signalisiert und die entsprechenden Signale über eine Steuerleitung 39 dem Steuergerät 28 zuführt. Das Steuergerät 28 kann, wie bereits beschrieben, den Stellmotor 15 ansteuern, wobei selbstverständlich auch jede andere Art der Ausführung der vom Steuergerät 28 zur Verfügung gestellten Steuersignale zur Verstellung des Einspritzzeitpunktes möglich ist.

Als weitere Ausführungsform ist denkbar, daß die beliebige last- und drehzahlabhängige Spritzverstellung über eine lastabhängige Bedienung des Außenhebels der Einrichtung gemäß der AT-PS 298 881 erreicht wird. Die drehzahlabhängige Spritzverstellung kann in Abhängigkeit von dem beispielsweise in der AT-PS 298 881 dargestellten Drehzahlmeßwerk erfolgen. Bei Verwendung eines Mikroprozessors lassen sich die Werte für die Drehzahl und für lastabhängige Signale in beliebiger Weise kombinieren, sodaß den speziellen Erfordernissen einer bestimmten Brennkraftmaschine in verbessertem Maße Rechnung getragen werden kann.

- 11 -

Patentansprüche:

1. Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrößen wie Drehzahl, Ladedruck, Motortemperatur od. dgl., gemessen werden und das jeweils vom Motor abgegebene Drehmoment ermittelt wird, worauf in Abhängigkeit von dem ermittelten Drehmoment unter Berücksichtigung zumindest der gemessenen Drehzahl der Förderbeginn der Kraftstoffeinspritzpumpe verstellt wird, dadurch gekennzeichnet, daß das Drehmoment aus der Abstützkraft des Motors an einem festen Hebelarm gegenüber dem Fahrzeugrahmen oder dem Motorfundament ermittelt wird.

2. Verfahren nach Anspruch 1, dadurch gekennzeichnet, daß ein weiterer Meßwert für die auf den Fahrzeugrahmen wirksamen Beschleunigungs- oder Verzögerungskräfte ermittelt wird, und daß der Meßwert für die Abstützkräfte des Motors unter Berücksichtigung der auf den Fahrzeugrahmen wirksamen Kräfte korrigiert wird.

3. Verfahren nach Anspruch 1 oder 2, dadurch gekennzeichnet, daß im Falle eines Motors mit angeflanschtem Schaltgetriebe ein die Getriebeübersetzung des automatischen oder handgeschalteten Getriebes kennzeichnendes Signal bei der Ermittlung des Motordrehmoments berücksichtigt wird.

4. Verfahren nach einem der Ansprüche 1 bis 3, dadurch gekennzeichnet, daß höherfrequente Schwingungen, wie sie im Fahrbetrieb beispielsweise beim Überfahren von Fahrbahnunebenheiten entstehen können, durch eine elektrische Schaltungsanordnung herausgefiltert werden.

5. Vorrichtung zur Durchführung des Verfahrens nach einem der Ansprüche 1 bis 4 mit Meßwertaufnehmern (27) für Betriebsgrößen wie Drehzahl, Ladedruck, Motortemperatur od.

dgl., sowie wenigstens einem weiteren Meßwertaufnehmer (29) zur Ermittlung des jeweils vom Motor (31) abgegebenen Drehmoments, welche Meßwertaufnehmer mit einem Prozessor zum Ausführen von mindestens einer Rechenoperation verbunden sind, welcher Prozessor einen Speicher zur Speicherung des auszuführenden Programms aufweist, und mit einer mit dem Prozessor verbundenen Betätigungseinrichtung (13, 15) zur Steuerung des Beginns der Kraftstofförderung der Einspritzpumpe (21), dadurch gekennzeichnet, daß der Meßwertaufnehmer (29) für die dem Motordrehmoment entsprechende Betriebsgröße als Kraftmesser für die Abstützkraft des Motors (31) gegenüber dem Fahrzeugrahmen (32) oder dem Motorfundament ausgebildet ist.

6. Vorrichtung nach Anspruch 5, dadurch gekennzeichnet, daß der Meßwertaufnehmer (29) zur Ermittlung des jeweils vom Motor (31) abgegebenen Drehmoments an oder in einer Drehmomentstütze (30) angeordnet ist.

7. Vorrichtung nach Anspruch 5, dadurch gekennzeichnet, daß der Kraftmesser (29) von einem piezoelektrischen Druckgeber oder einem Dehnungsmeßstreifen gebildet ist.

8. Vorrichtung nach Anspruch 5, dadurch gekennzeichnet, daß ein Beschleunigungsmesser (34), insbesondere ein Drehbeschleunigungsmesser, mit dem Fahrzeugrahmen (32) und elektrisch mit dem Prozessor verbunden ist.

9. Vorrichtung nach Anspruch 5, dadurch gekennzeichnet, daß ein die eingeschaltete Getriebestufe eines an den Motor (31) angeflanschten automatischen oder handgeschalteten Getriebes (37) erfassender Meßwertgeber (38) mit dem Prozessor verbunden ist.

- 13 -

10. Vorrichtung nach Anspruch 5, dadurch gekennzeichnet, daß das Steuergerät (28) eine elektrische Filterschaltung (36), vorzugsweise einen Tiefpaß, zumindest für die Signale des Kraftmessers (29) für die Abstützkraft des Motors (31) enthält.

1981 09 29 eh

FIG.1

FIG.2

FIG.3

FIG.4

FIG.9

FIG.5

FIG.6

FIG.7

FIG.8

FIG. 10

FIG. 11